# EUROPEAN PATENT APPLICATION

(11) **EP 1 117 242 A2**
(43) Date of publication of application: **18.07.2001**
(21) Application number: 01300246.4
(22) Date of filing: 12.01.2001
(51) Int. Cl.: H04M 3/533

(54) **Method and apparatus for annotated voice mail response**

(30) Priority: 12.01.2000 US 482715
(71) Applicant: Avaya Technology Corp., Miami Lakes, Florida 33014 (US)
(72) Inventor: Fix, Frederick Robert, Arvada, CO 80004 (US)
(74) Representative: Williams, David John

(57) **Abstract**

A voice mail system allows the recipient of a voice message to annotate the message with one or more verbal responses for delivery back to the originating party. The verbal responses are preferably inserted into the original message at the point or points within the message where responses are solicited. Thus, a reply message is generated having questions and verbal responses interleaved within a single message for replay by the originating party. In one embodiment, the message recipient indicates to the system, during message playback, the point in the message where he wishes to insert a verbal response. Playback is then paused and the recipient's verbal response is recorded. Playback is then resumed after the response has been recorded. Additional verbal responses can then be inserted in the same manner.

## Description

### TECHNICAL FIELD

The invention relates generally to communication networks and, more particularly, to voice mail systems for use within communication networks.

### BACKGROUND OF THE INVENTION

A voice mail system is a system that allows a first party to record a voice message for subsequent playback by a second party. The voice message is stored within a memory unit associated with the second party who can then play back the message at his convenience. Often, the voice message left by the first party includes a number of questions to be answered by the second party. The second party will ordinarily listen to these questions multiple times before he feels confident enough to attempt a response. The second party then calls the first party and either talks directly with the first party (or an associate of the first party) or leaves a return voice message for the first party. In the response, the second party will generally attempt to address each of the issues raised in the original voice message as best he remembers them. Often, however, the second party's recollection of the questions is faulty and an incomplete response is given. In addition, the first party's recollection can also be faulty, in which case the first party may not be able to determine the completeness or relevancy of the second party's response.

If a voice message is particularly long and/or complicated, the second party will sometimes write down the questions so that he is better able to address them in the response. This will generally require repeated replays of the message so that each question can be transcribed. In leaving a return message, the second party will often attempt to paraphrase each of the first party's original questions before responding, which can also lead to confusion. As can be appreciated, such techniques for responding to voice mail messages, particularly when the messages are long and complex, can be very complicated, inefficient, and time consuming.

Therefore, there is a need for a method and apparatus for responding to voice mail messages that is accurate, efficient, and relatively simple.

### SUMMARY OF THE INVENTION

The invention relates to a voice mail system that allows a user in receipt of a voice mail message having one or more questions in need of response to annotate the message for delivery back to the originating party. That is, the system allows a message recipient to insert one or more verbal responses into the original voice mail message at the point or points within the message where a response is solicited. Thus, a reply message is generated having questions and verbal responses interleaved within a single message for replay by the originating party. Because the message recipient addresses the questions one at a time and listens to each question just prior to responding, the recipient has no problem remembering each of the individual questions. In addition, because each of the verbal responses occurs just after the corresponding question in the annotated message, the originating party does not need to remember what he originally asked for to be able to access the completeness or relevancy of the response.

### BRIEF DESCRIPTION OF THE DRAWINGS

Fig. 1 is a block diagram illustrating a telephone unit having voice mail functionality in accordance with one embodiment of the present invention;
Fig. 2 is a block diagram illustrating a private branch exchange (PBX) system having voice mail functionality in accordance with one embodiment of the present invention;
Fig. 3 is a block diagram illustrating a central office within a public switched telephone network (PSTN) having voice mail functionality in accordance with one embodiment of the present invention;
Fig. 4 is a block diagram illustrating an Internet arrangement utilizing voice mail functionality in accordance with one embodiment of the present invention; and
Fig. 5 is a flowchart illustrating a method for annotating a voice mail message in accordance with one embodiment of the present invention.

### DETAILED DESCRIPTION

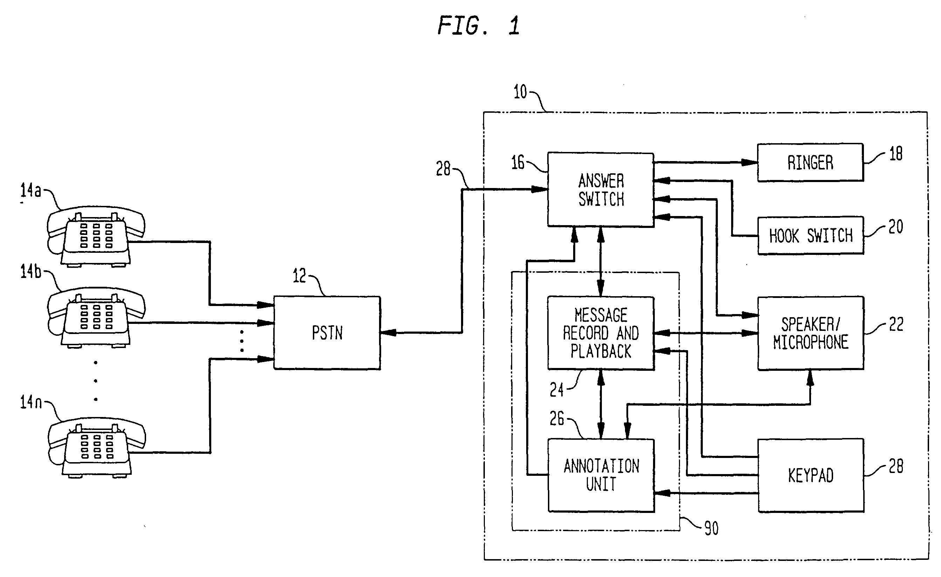

Fig. 1 is block diagram illustrating a telephone unit 10 including voice mail functionality in accordance with one embodiment of the present invention. As illustrated, the telephone unit 10 is coupled to a public switched telephone network (PSTN) 12 for enabling communication between the telephone unit 10 and any of a multitude of external telephone devices 14a, 14b, ..., 14n. That is, the PSTN 12 is operative for providing, upon request, a connection between two or more of the telephone devices 10, 14a, 14b, ..., 14n connected thereto so that users at the associated devices can communicate with one another. Typically, the communication through the PSTN 12 will consist of full-duplex voice communication, although other forms of communication are also possible (e.g., computer data).

As shown in Fig. 1, the telephone unit 10 includes: an answer switch 16, a ringer 18, a hook switch 20, a speaker/microphone 22, a voice mail system 90 having a message record and playback unit (MRPU) 24 and an annotation unit 26, and a keypad 28. The ringer 18, hook switch 20, speaker/microphone 22, and keypad 28 are all elements found in a conventional telephone apparatus. The ringer 18 is a device that informs a user associated with the telephone unit 10 (typically by an audible "ringing" sound) that a call has been received and is waiting to be answered. The hook switch 20 is a switch device that is activated when the user answers the telephone. Typically, the hook switch 20 is a mechanical switch that automatically closes when a handset is lifted from the telephone cradle. However, other forms of hook switch, such as the pushbutton switch on a cordless phone or the speaker switch on a speaker phone, are also common. The speaker/microphone 22 is the audio input/output device that the user of telephone unit 10 utilizes to send and receive voice signals. For example, the speaker/microphone 22 can include the speaker and microphone of a conventional telephone handset or the base unit of a speaker phone. The keypad 28 will preferably include the conventional 12-key telephone keypad. Additional special-purpose function keys can also be included on the keypad 28 for use in providing additional input functionality.

The answer switch 16 is operative for directing an incoming call to an appropriate destination within the telephone unit 10 based upon whether or not the call is answered by a user of the telephone unit 10. The answer switch 16 receives a call from the PSTN 12 via loop 28 and immediately signals the ringer 18 to begin ringing. If someone answers (i.e., the hook switch 20 is activated) before a predetermined number of rings have occurred, the answer switch 16 provides a connection between the input loop 28 and the speaker/microphone 22 and a two-way telephone conversation ensues. If no answer is detected before the predetermined number of rings have occurred, the answer switch 16 directs the call to the MRPU 24 which allows the caller to leave a message for the called party. The caller is prompted when to begin speaking and the subsequent voice message is recorded within an internal memory of the MRPU 24.

When the user associated with telephone unit 10 desires to listen to his recorded messages, he delivers a signal to the MRPU 24 (e.g., using the keypad 28) indicating same. In response, the MRPU 24 delivers the recorded messages in series to the speaker/microphone 22 for playback to the user. During playback, the user is given the opportunity to save or delete each of the messages, or all of the messages, by delivering an appropriate signal to the MRPU 24 using keypad 28.

Typically, one or more of the messages stored in the MRPU 24 will include a plurality of questions that the corresponding caller wants the user of telephone unit 10 to answer. The annotation unit 26 allows the user to individually answer each of the questions posed by the caller as the message is being played back. More importantly, the annotation unit 26 allows each of the user's verbal responses to be inserted into the original message at the point in the message where the response is solicited. In this manner, a reply message is generated that has the user's verbal responses interleaved with the questions of the original message left by the caller. The reply message is subsequently delivered to the caller for replay.

The user of telephone unit 10 will normally listen to a particular voice message in its entirety at least once before attempting annotation to determine what type of information is being solicited. The user then indicates to the annotation unit 26 (e.g., using keypad 28) that he wishes to annotate the message. In response, the annotation unit 26 signals the MRPU 24 to initiate playback of the message through speaker/microphone 22. During playback, the annotation unit 26 waits for input from the user via keypad 28 indicating that a verbal response is to be added. When an appropriate signal is received from the keypad 28, the annotation unit 26 signals the MRPU 24 to pause playback of the message. The user is then prompted to begin his first verbal response and the MRPU 24 records the response.

After the verbal response has been recorded, the annotation unit 26 signals the MRPU 24 to resume message playback at the point where it was previously paused. In one embodiment, the user indicates to the annotation unit 26 that the verbal response has ended by delivering a predetermined signal to the MRPU 24 using keypad 28. After message playback has resumed, the annotation unit 26 again waits for input from the user and, if the user indicates a desire to insert another verbal response within the voice message, the process is repeated. This continues until the entire message has been played back. Often, the user will insert a header at the beginning of the reply message identifying the message that follows as a reply to an earlier message received by the user from the corresponding caller.

The reply message to be delivered back to the original caller can be generated in real time during the message annotation process described above or it can be generated after all of the verbal responses from the user have been recorded. For example, in one approach, a separate recording is made during the annotation process whereby the message being played back and the verbal responses thereto are recorded as they occur. Digital or analog recording can be used. After playback is complete, this recording represents the annotated message. In another approach, the annotation unit 26 remembers where each of the recorded verbal responses is to be inserted into the original message and the reply message is then synthesized after message playback has completed. In a system that stores voice signals digitally, this signal synthesis can be accomplished by simply moving data around within the digital memory unit. Other techniques for generating the reply message are also possible.

After the reply message has been generated, the user is asked whether he wishes to review the message before delivery. If the user wishes to review the reply message, the annotation unit 26 signals the MRPU 24 to replay the entire reply message for the user. If the user disapproves of the reply message, he is given a chance to repeat the annotation process using the originally received message. If the user approves of the reply message, or if he did not desire to review the reply message, the user is next asked whether he wants to deliver the reply message now or at a later time. If the user wishes to wait, the reply message is stored for later delivery. If the user wishes to send the reply message immediately, the annotation unit 26 dials a telephone number associated with the original caller and signals the MRPU 24 to replay the reply message at an appropriate time (e.g., when someone answers and/or when an answering machine begins recording). In a preferred approach, the original caller's telephone number is recorded at the time of the original call (using, for example, caller ID functionality) and stored alongside the original voice message. The annotation unit 26 then accesses this information when a "send reply message" indication is received. Alternatively, the user can be asked to enter the telephone number of the original caller (or another telephone number) after the reply message has been approved.

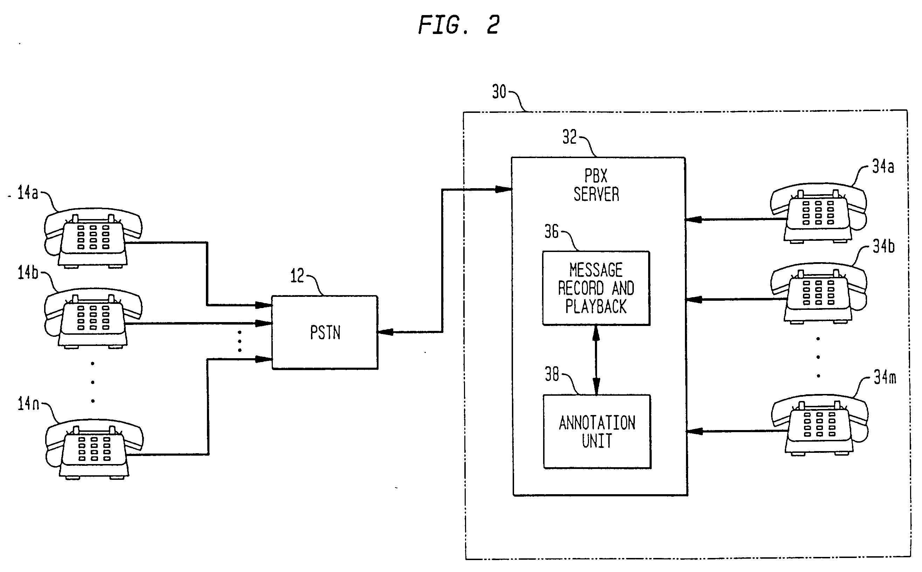

Fig. 2 is a block diagram illustrating a private branch exchange (PBX) system 30 incorporating the principles of the present invention. As with the telephone unit 10 of Fig. 1, the PBX system 30 of Fig. 2 is coupled to a PSTN 12 for enabling communication between the system 30 and any of a multitude of external telephone devices 14a, 14b, ..., 14n. As illustrated, the PBX system 30 includes a PBX server 32 having a plurality of extension telephone devices 34a, 34b,..., 34m coupled thereto. In addition to the typical PBX functionality, the PBX server 32 also includes an MRPU 36 and an annotation unit 38 similar to the corresponding units described previously. However, instead of serving only a single telephone unit, the MRPU 36 and the annotation unit 38 are each operative for providing voice mail services for a plurality of extension telephone devices 34a, 34b, ..., 34m. Access to the MRPU 36 and the annotation unit 38 from one of the extension telephones 34a, 34b, ..., 34m is preferably provided by dialing a predetermined telephone number from the extension and then entering an access code. Once access has been achieved, operation of the MRPU 36 and the annotation unit 38 is substantially the same as the corresponding units described previously. The MRPU 36 can record a message directed to a user associated with one of the extension telephones 34a, 34b, ...,34m that originates from a user at an external telephone device (e.g., telephone device 14a, 14b, ..., 14n) or from another of the extension telephones 34a, 34b, ..., 34m in PBX system 30.

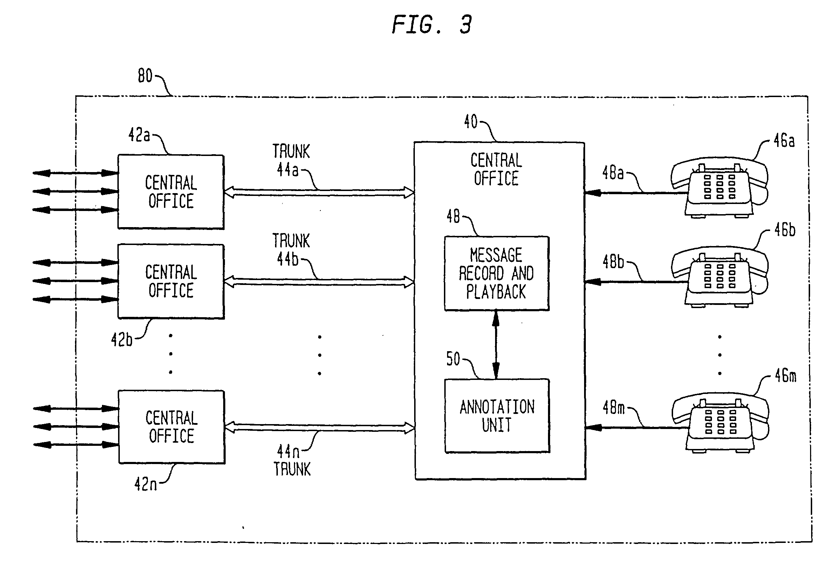

Fig. 3 is a block diagram illustrating a PSTN 80 having a central office 40 that includes voice mail functionality in accordance with the present invention. The central office 40 is coupled to a number of remote central offices 42a, 42b, ..., 42n within the PSTN 80 via respective trunk lines 44a, 44b, ... , 44n. The central office 40 is also coupled to a plurality of user telephone devices 46a, 46b, ..., 46m via corresponding local loops 48a, 48b,..., 48m. As illustrated in Fig. 3, the central office 40 includes an MRPU 48 and an annotation unit 50 similar to the ones described previously. Users associated with telephone devices 46a, 46b, ..., 46m are given the option to subscribe to voice mail services provided by the MRPU 48 and the annotation unit 50. Subscribers are assigned a voice mailbox that they can access by dialing a predetermined telephone number and entering an access code. They can then listen to and annotate their voice mail messages as described above.

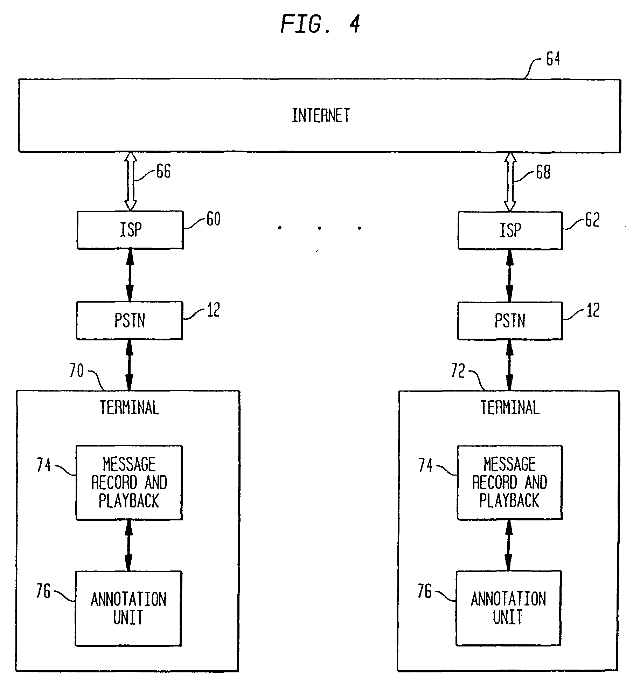

The principles of the present invention are not limited to use within conventional telephony systems. That is, voice messaging in accordance with the invention can also be practiced in connection with other types of communication network, such as the Internet (e.g., using "voice over IP" techniques). Fig. 4 is a block diagram illustrating the use of the inventive principles within an Internet Protocol (IP) environment. As illustrated, a number of Internet Service Providers (ISPs) 60, 62 are coupled to the Internet backbone 64 for use in providing access to the Internet for a plurality of subscribers located at external user terminals 70, 72. Each of the external user terminals 70, 72 will typically connect to a corresponding ISP 60, 62 through an intermediary network, such as PSTN 12. Direct connections between terminals and the ISP are also possible. Although not shown, each of the ISPs 60, 62 is capable of providing access services to a large number of subscribers simultaneously.

Typically, each terminal 70, 72 will comprise a personal computer having ISP-provided software loaded into an internal memory for use in supporting the connection. Each of the terminals 70, 72 will also preferably include a speaker, a microphone, and sound card functionality. As illustrated, in accordance with the invention, each of the terminals 70, 72 includes an MRPU 74 and an annotation unit 76 similar to those described above. However, instead of receiving and recording an analog audio signal from a remote entity for playback by a local user, the MRPU 74 receives digitized voice signals following a signal protocol supported by the backbone 64 (e.g., Internet Protocol). The MRPU 74 processes the digitized voice signals received from the backbone 64 to generate a voice message that is then stored for later playback by the local user.

The annotation unit 76 operates substantially as described previously. That is, the local user indicates to the annotation unit 76 (using, for example, a keyboard, a mouse, a graphical user interface (GUI), voice recognition software, or any other computer input device) that he wishes to annotate a particular voice message received from a remote user. The selected message is then played back and the local user is able to insert voice responses at intermediate positions within the voice message to generate a reply message. The reply message is then redelivered to the remote user via the Internet backbone 64 or another network.

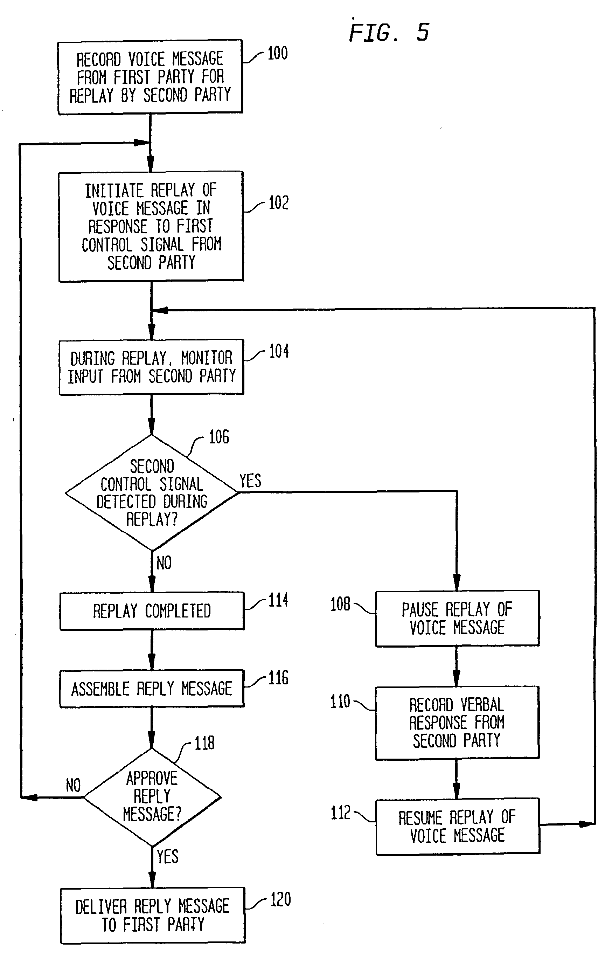

Fig. 5 is a flowchart illustrating a method for annotating voice mail messages in accordance with one embodiment of the present invention. As illustrated, a voice message from a first party is initially recorded for subsequent replay by a second party (step 100). Replay of the voice message is later initiated in response to a first control signal from the second party, (step 102). The first control signal can be, for example, the signal generated by depressing one or more keys on a telephone keypad or computer keyboard, or one or more buttons on a graphical user interface (GUI), in a predetermined sequence. During replay of the voice message, inputs from the second party are monitored (step 104). If a second control signal from the second party is detected while monitoring, replay of the voice message is immediately paused (steps 106, 108) and a verbal response message from the second party is recorded (step 110). After the verbal response message has been recorded, replay of the original voice message is resumed (step 112). Input from the second party is again monitored (step 104) and, if the second signal is again detected, another verbal response message is recorded as described above. This process continues until replay of the voice message ends (step 114), after which no further annotation of the message can be made.

A reply message having the verbal responses of the second party interleaved at selected locations within the original message is assembled for delivery back to the first party (step 116). The reply message can be assembled during the replay period or after the replay has completed. The second party is then permitted to review the reply message to determine whether all of the issues within the original message have been addressed in an audible and accurate manner (step 118) in the reply message. If the second party approves of the reply message, the message is delivered to the first party via appropriate means, which is preferably the same means through which the original voice message was delivered to the second party (step 120). If the second party does not approve of the return message, the return message is erased and the second party is given the opportunity to repeat the annotation process.

Although the present invention has been described in conjunction with its preferred embodiments, it is to be understood that modifications and variations may be resorted to without departing from the spirit and scope of the invention as those skilled in the art readily understand. For example, the inventive principles can be used in any type of communication network that allows voice messages to be delivered from one user to another user and is not limited to telephony or IP based systems. Such modifications and variations are considered to be within the purview and scope of the invention and the appended claims.

## Claims

1. A method for use in connection with a messaging system, comprising the steps of:
recording a voice message from a first party for subsequent playback by a second party;
initiating playback of said voice message in response to a first control signal from said second party;
waiting, during playback of said voice message, for a second control signal from said second party, said second control signal indicating that said second party desires to annotate said voice message with a verbal response; and
when said second control signal is detected, pausing playback of said voice message, initiating recording of said verbal response, and resuming playback of said voice message after said verbal response has ended.

2. The method claimed in claim 1, further comprising the step of:
generating a reply message having said verbal response inserted at a selected point within said voice message.

3. The method claimed in claim 2, wherein:
said selected point within said voice message is a point at which playback of said voice message was paused in said step of pausing playback.

4. The method claimed in claim 2, further comprising the step of:
delivering said reply message to said first party.

5. The method claimed in claim 1, wherein:
said step of resuming playback includes detecting a third control signal from said second party indicating that said verbal response has ended and playing a remainder of said voice message in response thereto, wherein said remainder of said voice message includes a portion of said voice message occurring after a point where playback of said voice message was paused in said step of pausing playback.

6. The method claimed in claim 1, wherein:
said second control signal is generated by pressing one or more keys on an input device in a predetermined sequence.

7. The method claimed in claim 1, further comprising:
repeating said step of waiting after said step of resuming playback.

8. A messaging system comprising:
a message record and playback unit for recording a voice message from a first party for subsequent playback by a second party and for playing back said voice message for said second party in response to a first control signal received from said second party;
a first input for receiving control signals from said second party;
a second input for receiving verbal responses from said second party;
a first output for delivering said voice message to a speaker unit associated with said second party during playback of said voice message; and
an annotation unit coupled to said message record and playback unit for use in annotating said voice message with a verbal response received from said second party via said second input to generate a reply message, said annotation unit inserting said verbal response into said voice message at a point indicated by said second party during playback of said voice message.

9. The messaging system claimed in claim 8, wherein:
said annotation unit is capable of inserting multiple verbal responses within said voice message at locations indicated by said second party.

10. The messaging system claimed in claim 8, wherein:
said annotation unit inserts said verbal response into said voice message at a point within said voice message at which a second control signal is received from said second party during playback of said voice message.

11. The messaging system claimed in claim 8, wherein:
said annotation unit and said message record and playback unit are each associated with a private branch exchange (PBX) server, wherein said second party is associated with an extension telephone coupled to said PBX server.

12. The messaging system claimed in claim 8, wherein:
said annotation unit and said message record and playback unit are each located within a central office of a public telephone network, wherein said second party is associated with a telephone device coupled to said central office via local loop.

13. The messaging system claimed in claim 8, wherein:
said annotation unit and said message record and playback unit are each located within a personal computer associated with the second party.

14. The messaging system claimed in claim 8, further comprising:
a second output for use in delivering said reply message to said first party.

15. A messaging system comprising:
means for recording a voice message from a first party for subsequent playback by a second party;
means, coupled to said means for recording, for annotating said voice message with a verbal response from said second party, said means for annotating including means for receiving a verbal response from said second party, means for receiving a control signal from said second party indicating a position within said voice message for insertion of said verbal response, and means for inserting said verbal response into said voice message at the position indicated by said control signal; and
means for delivering said annotated voice message to said first party.

16. The messaging system claimed in claim 15, wherein:
said means for annotating includes means for inserting multiple verbal responses from said second party into said voice message at multiple positions indicated by said second party.

17. The messaging system claimed in claim 15, further comprising:
means for playing back said voice message for said second party, wherein said second party indicates said position within said voice message for insertion of said verbal response by delivering said control signal to said means for receiving during playback of said voice message.
